# EUROPEAN PATENT APPLICATION

(11) **EP 2 420 996 A1**
(43) Date of publication of application: **22.02.2012**
(21) Application number: 11762530.1
(22) Date of filing: 10.03.2011
(51) Int. Cl.: G09G 5/36, G09G 3/20, G09G 3/36, G09G 5/00, H04N 13/04

(54) **VIDEO DISPLAY DEVICE, VIDEO DISPLAY SYSTEM, VIDEO DISPLAY METHOD, AND COMPUTER PROGRAM**

(30) Priority: 31.03.2010 JP 2010081200
(71) Applicant: Sony Corporation, Tokyo 108-0075 (JP)
(72) Inventor: KIKUCHI, Kazunori, Tokyo 108-0075 (JP); TSURUMOTO, Takashi, Tokyo 108-0075 (JP); SATOH, Yoshinori, Tokyo 108-0075 (JP)
(74) Representative: Turner, James Arthur
(86) International application number: PCT/JP2011/055646
(87) International publication number: WO 2011/122290

(57) **Abstract**

An object of the present invention is to notify an observer who is wearing shutter glasses of information related to the remaining battery capacity or the like of the shutter glasses, through display of a stereoscopic image. To that end, shutter glasses (20) transmit internal information such as the remaining capacity of a battery (22) to a display apparatus (10). On the display apparatus (10) side, notification or warning of the remaining capacity is displayed on the screen by a display section (11). Of course, this notification or warning can be also presented as a time-division stereoscopic image. In such a case, the observer can check a state such as exhaustion of the battery (22) while keeping wearing the shutter glasses (20), that is, while viewing a stereoscopic image.

## Description

### Technical Field

The present invention relates to an image display apparatus, an image display system, an image display method, and a computer program, which are used for display of a stereoscopic image using shutter glasses, and alternately switch and display a plurality of images on the screen in a very short cycle, in particular, an image display apparatus, an image display system, an image display method, and a computer program, which notify an observer who is wearing shutter glasses of information related to the internal state of the shutter glasses such as the remaining battery capacity of the shutter glasses that are battery-driven.

### Background Art

A stereoscopic image which appears stereoscopically to an observer can be presented by displaying images with disparity to the left and right eyes. An example of schemes for presenting a stereoscopic image is to have the observer wear glasses having special optical characteristics, and present views with disparity to both eyes. For example, a time-division stereoscopic image display system is made up of a combination of a display apparatus that displays a plurality of mutually different images by time division, and shutter glasses that are worn by the observer of the images. The display apparatus displays a left-eye image L and a right-eye image R alternately on the screen in a very short cycle and, at the same time, separately provides the images to the left eye and the right eye in synchronism with the cycles of the left-eye image L and right-eye image R. On the other hand, in the shutter glasses being worn by the observer, while the left-eye image L is displayed, the left-eye part of the shutter glasses passes light and the right-eye part blocks light, and while the right-eye image R is displayed, the right-eye part of the shutter glasses passes light and the left-eye part blocks light (see, for example, PTLs 1 to 3).

In the time-division stereoscopic image display system, when displaying the left-eye image L and the right-eye image R by time division, it is necessary to separate the left-eye image L and the right-eye image R so as to avoid crosstalk. Normally, the display apparatus notifies the shutter glasses of the open/close timing of shutters.

Also, considering such cases as when a stereoscopic image is viewed at a desired location in a room where the display apparatus is placed, and when a plurality of viewers view the same stereoscopic image together, shutter glasses are preferably cordless, in other words, battery-driven. Of course, even in the case of shutter glasses attached with a cord, it is convenient if the shutter glasses are battery-driven. Here, when the apparatus is of a battery-driven type, the operation time of the shutter glasses is limited by the battery capacity. Also, when the remaining battery capacity becomes equal to or less than a given level, an operation such as replacement or charging of the battery becomes necessary.

Many of battery-driven equipment are provided with an LED indicator or the like that provides notification or warning of the battery's remaining capacity or the like. However, in the case of shutter glasses, each time the user is to check whether or not the state of the battery has changed while viewing a stereoscopic image, the user needs to remove the shutter glasses from the head and observe the display of the LED indicator, resulting in a lack of convenience for the user. Also, if the user keeps viewing the stereoscopic image while wearing the shutter glasses even through the remaining capacity of the battery has dropped significantly, a signal notifying the open/close timing of the shutters cannot be received from the display apparatus, which makes it impossible to turn the left and right shutters on/off in accordance with switching of images, or the shutters cannot be turned on/off due to a drop in driving electric power. As a result, a stereoscopic image cannot be displayed. While wearing the shutter glasses, the user is unable to discern whether such a situation is due to exhaustion of the battery or malfunction on the display apparatus side (for example, failure of a transmitter that transmits the notification signal).

### Citation List

### Patent Literature

PTL 1: Japanese Unexamined Patent Application Publication No. 9-138384
PTL 2: Japanese Unexamined Patent Application Publication No. 2000-36969
PTL 3: Japanese Unexamined Patent Application Publication No. 2003-45343

### Summary of Invention

### Technical Problem

An object of the present invention is to provide superior image display apparatus, image display system, image display method, and computer program, which are used for display of a stereoscopic image using shutter glasses, and can suitably switch and display a plurality of images on the screen alternately in a very short cycle.

A further object of the present invention is to provide superior image display apparatus, image display system, image display method, and computer program, which can suitably notify an observer who is wearing shutter glasses of information related to the internal state of the shutter glasses such as the remaining battery capacity of the shutter glasses that are battery-driven.

### Solution to Problem

The present application has been made in view of the above-mentioned problems, and the invention as defined in Claim 1 is an image display apparatus including:
a display section that switches and displays a plurality of images that are different from each other by time division;
a communication section that communicates with shutter glasses driven by a battery; and
a control section that controls an apparatus operation,
in which the communication section transmits information related to open/close timing of shutters to the shutter glasses, and receives state information of the battery from the shutter glasses, and
the control section displays a warning in the plurality of images on the display section, upon detecting a decrease in remaining capacity of the battery on a basis of the received state information of the battery.

According to the invention as defined in Claim 2 of the present application, the communication section of the image display apparatus as defined in Claim 1 is configured to be capable of communicating with a plurality of pairs of shutter glasses, and to display visual information in the plurality of images on the display section, the visual information representing a state of the battery for each of the pairs of shutter glasses.

According to the invention as defined in Claim 3 of the present application, the communication section of the image display apparatus as defined in Claim 1 is configured to be capable of capable of communicating with a plurality of pairs of shutter glasses, and to display the plurality of images including display of the warning on the display section, only with respect to some of observers wearing those pairs of shutter glasses for which a decrease in remaining capacity of the battery has been detected among the plurality of pairs of shutter glasses.

According to the invention as defined in Claim 4 of the present application, upon detecting a decrease in remaining capacity of the battery in any one of the plurality of pairs of shutter glasses, the image display apparatus as defined in Claim 3 is configured to insert a frame including display of the warning into each of the plurality of images, thereby displaying the warning to some corresponding observers. Also, with respect to other pairs of shutter glasses for which a decrease in remaining capacity of the battery is not detected, the image display apparatus is configured to transmit information related to open/close timing of the shutters which instructs that all of the shutters be kept in a closed state during the display period of this warning. Therefore, since the frame including display of the warning is blocked from the eyes of irrelevant observers, the warning is displayed only with respect to some of observers who are wearing shutter glasses for which a decrease in remaining capacity of the battery has been detected.

Also, the invention as defined in Claim 5 of the present application is an image display system including:
shutter glasses each having a shutter mechanism provided in a lens, the shutter glasses being driven by a battery; and
a display apparatus that switches and displays a plurality of images that are different from each other by time division,
in which the display apparatus transmits information related to open/close timing of shutters according to switching of the plurality of images, to the shutter glasses,
the shutter glasses perform an opening/closing operation of the shutters on a basis of the information related to open/close timing of the shutters received from the display apparatus, and transmit state information of the battery to the display apparatus, and
the display apparatus displays a warning in the plurality of images on the display section, upon detecting a decrease in remaining capacity of the battery on a basis of the state information of the battery received from the shutter glasses.

It should be noted that the term "system" as used herein refers to a logical aggregation of a plurality of apparatuses (or functional modules for implementing specific functions), and it does not particularly matter whether the apparatuses or functional modules are located within a single casing.

Also, the invention as defined in Claim 6 of the present application is an image display method which displays an image on a display apparatus including a display section and a communication section, including:
a time-division image displaying step of switching and displaying a plurality of images that are different from each other by time division, by the display section;
a shutter controlling step of transmitting information related to open/close timing of shutters to shutter glasses driven by a battery, from the communication section; and
a controlling step of performing control so as to display a warning in the plurality of images on the display section, upon detecting a decrease in remaining capacity of the battery on a basis of state information of the battery which is received from the shutter glasses by the communication section.

Also, the invention as defined in Claim 7 of the present application is a computer program which is described in a computer-readable format so as to execute, on a computer, processing for displaying an image on a display apparatus including a display section and a communication section, the computer program causing the computer to function as:
time-division image displaying means for switching and displaying a plurality of images that are different from each other by time division, by the display section;
shutter controlling means for transmitting information related to open/close timing of shutters to shutter glasses driven by a battery, from the communication section; and
controlling means for performing control so as to display a warning in the plurality of images on the display section, upon detecting a decrease in remaining capacity of the battery on a basis of state information of the battery which is received from the shutter glasses by the communication section.

The computer program according to Claim 7 of the present application defines a computer program that is described in a computer-readable format so as to implement predetermined processing on a computer. In other words, by installing the computer program according to Claim 7 of the present application to the computer, synergistic operation is exerted on the computer, making it possible to obtain the same operational effect as that of the image display apparatus according to Claim 1 of the present application. Advantageous Effects of Invention

According to the present invention, it is possible to provide superior image display apparatus, image display system, image display method, and computer program, which can suitably notify an observer who is wearing shutter glasses of information related to the internal state of the shutter glasses such as the remaining battery capacity of the shutter glasses that are battery-driven.

According to the present invention, it is possible to provide superior image display apparatus, image display system, image display method, and computer program, which can suitably notify an observer who is wearing shutter glasses of information related to the remaining battery capacity or the like of the shutter glasses that are battery-driven, through display of a stereoscopic image.

Also, according to the invention as defined in each of Claims 2 to 4 of the present application, it is possible to provide superior image display apparatus, image display system, image display method, and computer program, which can suitably notify each of a plurality of observers wearing shutter glasses of information related to the remaining battery capacity or the like of the shutter glasses that are battery-driven, through display of a stereoscopic image.

Other objects, features, and advantages of the present invention will become apparent from the following detailed description of embodiments of the present invention and the accompanying drawings.

### Brief Description of Drawings

[Fig. 1] Fig. 1 is a diagram schematically showing the configuration of a stereoscopic image display system 1 to which the present invention can be applied.
[Fig. 2] Fig. 2 is a diagram for explaining a mechanism for separately presenting a left-eye image and a right-eye image to an observer in the time-division stereoscopic image display system 1.
[Fig. 3] Fig. 3 is a diagram showing the control operation of shutter glasses 20 in an L sub-frame period.
[Fig. 4] Fig. 4 is a diagram showing the control operation of the shutter glasses 20 in an R sub-frame period.
[Fig. 5] Fig. 5 is a diagram showing an example of a communication sequence in which a display apparatus 10 acquires state information of a battery 22 from the shutter glasses 20.
[Fig. 6] Fig. 6 is a flowchart showing a procedure in which the shutter glasses 20 transmit information related to the state of the battery 22 to the display apparatus 10.
[Fig. 7] Fig. 7 is a flowchart showing a procedure in which the display apparatus 10 receives state information of the battery 22 from the battery 20.
[Fig. 8] Fig. 8 is flowchart showing a procedure performed on the display apparatus 10 side on the basis of state information of the battery 22 acquired from the shutter glasses 20.
[Fig. 9] Fig. 9 is a diagram illustrating visual information related to voltage levels of a battery.
[Fig. 10] Fig. 10 is a diagram showing a state in which when a plurality of pairs of shutter glasses are connected to the display apparatus 10, battery icons for individual pairs of shutter glasses are displayed on the screen of a display section 11.
[Fig. 11] Fig. 11 is a diagram showing an operation of controlling the open/close timing for each pair of shutter glasses so that a battery icon is displayed only to an observer wearing shutter glasses whose battery is exhausted.
[Fig. 12] Fig. 12 is a diagram showing an example of a communication sequence performed for the display apparatus 10 to acquire state information of the battery 22 from a plurality of pairs of shutter glasses 20-1, 20-2, and so on, and display a battery icon to a required observer in accordance with a decrease in the remaining capacity of the battery 22 in any one of the pairs of shutter glasses.
[Fig. 13] Fig. 13 is a flowchart showing a procedure for controlling the open/close timing of shutters on the shutter glasses 20 side in accordance with a response frame from the display apparatus 10, in the communication sequence shown in Fig. 12.

### Description of Embodiments

Hereinbelow, embodiments of the present invention will be described in detail with reference to the drawings.

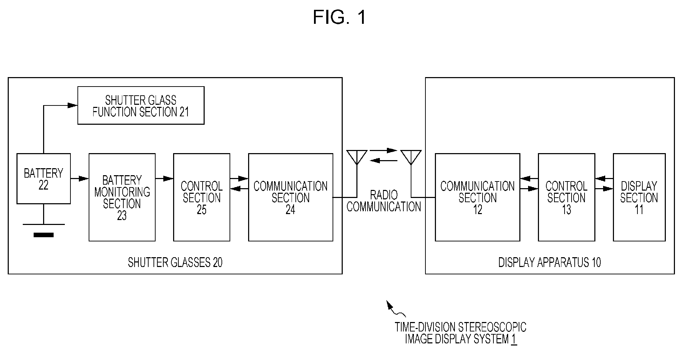

Fig. 1 schematically shows the configuration of a time-division stereoscopic image display system 1 to which the present invention can be applied. The time-division stereoscopic image display system 1 shown in the drawing includes a display apparatus 10, and shutter glasses 20 that are worn by an observer. The display apparatus 10 switches and displays a plurality of mutually different images such as a left-eye image and a right-eye image by time division. On the other hand, the shutter glasses 20 operate shutters provided in left and right lenses so as to open and close in synchronism with switching of images by the display apparatus 10, thereby separating the left-eye image and the right-eye image.

The display apparatus 10 includes a display section 11 that performs image display, a communication section 12 that performs data communication with the shutter glasses 20, and a control section 13 that controls the overall operation of the display apparatus 10.

The shutter glasses 20 include a shutter glass function section 21, a battery 22 as a main power supply, a battery monitoring section 23 that monitors the state of the battery 22 such as the remaining capacity, a communication section 24 that performs data communication with the display apparatus 10, and a control section 25 that controls the overall operation of the shutter glasses 20.

For the shutter glasses 20 to accurately operate the shutters so as to open and close in synchronism with switching of images on the display apparatus 10 side, it is necessary to notify the shutter glasses 20 of the open/close timing of the shutters from the display apparatus 10.

Data communication between the display apparatus 10 and the shutter glasses 20, including notification of the open/close timing of the shutters, is performed between their respective communication section 12 and communication section 24. The present embodiment assumes that the shutter glasses 20 are cordless, and a radio technology is applied to this data communication.

Here, infrared communication can be given as an example of radio communication means between the display apparatus 10 and the shutter glasses 20. According to infrared communication, every time images are switched by time division, notification of the open/close timing of the shutters from the display apparatus 10 to the shutter glasses 20 can be performed with relatively low power consumption. However, there are such problems that the location where the observer wearing the shutter glasses 20 should be present is limited due to the directivity of infrared rays, and adequate services are not provided using data communication due to the one-way communication.

Also, a wireless network such as IEEE802.15.4 can be given as another example of the radio communication means for connecting between the display apparatus 10 and the shutter glasses 20. A wireless network provides two-way communication, and also enables data communication from the shutter glasses 20 to the display apparatus 10, thereby expanding the range of services that can be provided by the system 1.

A wireless network requires high power consumption in comparison to infrared communication. For this reason, if notification of the open/close timing of the shutters is performed successively from the display apparatus 10 to the shutter glasses 20, the battery-driven shutter glasses 20 side must constantly wait for reception, which places an excessive burden on the battery 22. On the other hand, by establishing synchronization of the clock frequency and coincidence of the value of a counter used for opening/closing of the shutters between the shutter glasses 20 and the display apparatus 10 by means of two-way communication, thereafter, notification of the open/close timing and parameters from the display apparatus 10 to the shutter glasses 20 only needs to be performed intermittently. That is, there is no need for the shutter glasses 20 to constantly wait for reception even during the period in which a stereoscopic image is being displayed, which makes it possible to reduce power consumption. An image display system using a wireless network is disclosed in, for example, the specification of Japanese Patent Application No. 2009-276948 which has already been assigned to the present applicant.

The following description is given assuming that a wireless network such as IEEE802.15.4 is employed as the radio communication means between the display apparatus 10 and the shutter glasses 20. While in the system configuration example shown in Fig. 1 the display apparatus 10 and the shutter glasses 20 perform one-to-one communication, it is also possible for the communication section 12 of the display apparatus 10 to act as an access point so as to contain a plurality of pairs of shutter glasses each acting as a terminal station.

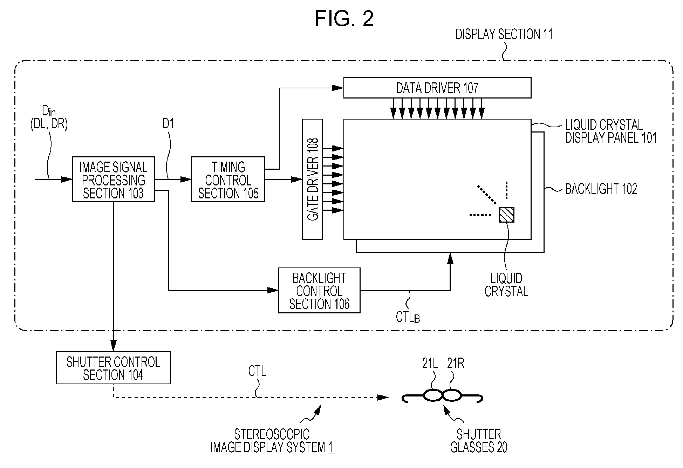

Subsequently, with reference to Fig. 2, a description will be given of a mechanism for separately presenting the left-eye image and the right-eye image to the observer in the time-division stereoscopic image display system 1. It should be noted, however, that a liquid crystal display 100 is used here as the display section 11 of the display apparatus 10.

The liquid crystal display 100 includes a liquid crystal display panel 101, a backlight 102, an image signal processing section 103, a shutter control section 104 that controls the open/close timing of the shutter mechanism of the shutter glasses 200, a timing control section 105, a backlight control section 106, a data driver 107, and a gate driver 108.

The liquid crystal display panel 101 has a plurality of pixels arrayed in matrix as a whole, and modulates light emitted from the backlight 102 on the basis of an image voltage supplied from the data driver 107, in accordance with a driving signal supplied from the gate driver 108, thereby performing image display based on an input image signal Dᵢₙ. In the present embodiment, the liquid crystal display panel 11 alternately displays a right-eye image R based on a right-eye image signal D_{R} and a left-eye image L based on a left-eye image signal D_{L} by time division, within a predetermined cycle such as a 1-frame period.

The image signal processing section 103 controls the write order (that is, the display order) of the right-eye image signal D_{R} and the left-eye image signal D_{L} to the liquid crystal display panel 101 on the basis of the input image signal Dᵢₙ, thereby generating an image signal for the liquid crystal display panel 11. In the present embodiment, from the input image signal Dᵢₙ, the image signal processing section 103 generates an image signal D1 in which the left-eye image signal D_{L} and the right-eye image signal D_{R} are arranged alternately within a 1-frame period. Hereinafter, of the 1-frame period, the display period of the left-eye image L and the display period of the right-eye image R will be referred to as "L sub-frame period" and "R sub-frame period", respectively.

The timing control section 105 controls the drive timing of each of the gate driver 108 and the data driver 107, and supplies the image signal D1 supplied from the image signal processing section 103 to the data driver 107.

The gate driver 108 sequentially drives each of pixels in the liquid crystal display panel 101 along a gate line, in accordance with timing control by the timing control section 105. Also, the data driver 107 supplies an image voltage based on the image signal D1 supplied from the timing control section 105, to each of the pixels in the liquid crystal display panel 101. Specifically, D/A conversion is applied to the image signal D1 to generate an analog image signal corresponding to the image voltage, and the analog image signal is outputted to each of the pixels.

The shutter control section 104 performs notification of the open/close timing of the left and right shutter mechanisms and parameters, on the basis of the output timing of the right-eye image signal D_{R} and left-eye image signal D_{L} by the image signal processing section 103, in a predetermined cycle through the communication section 12.

The shutter glasses 20 have a left-eye lens 21L and a right-eye lens 21R. The left-eye lens 21L and the right-eye lens 21R are each provided with a light-blocking shutter (not shown) for blocking the opening from light. The light-blocking shutter is formed by, for example, a liquid crystal shutter. Inside the shutter glasses 20, the enable state of the light-blocking function in the light-blocking shutter (that is, the closed state), and the disable state (that is, the open state) are controlled in accordance with the received shutter open/close timing and parameters.

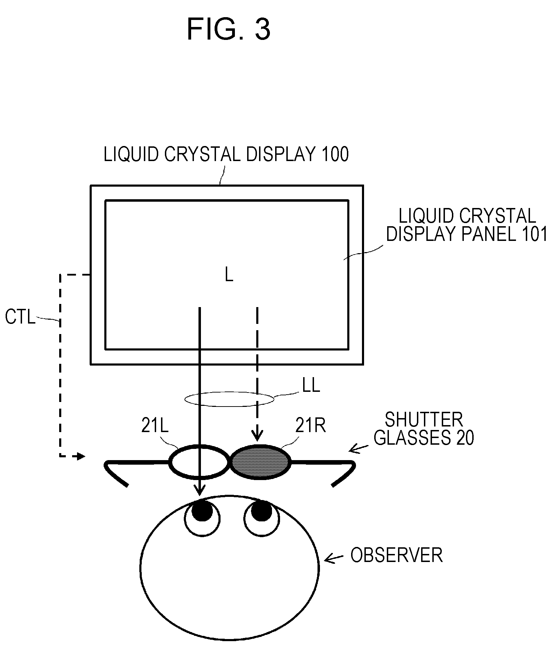

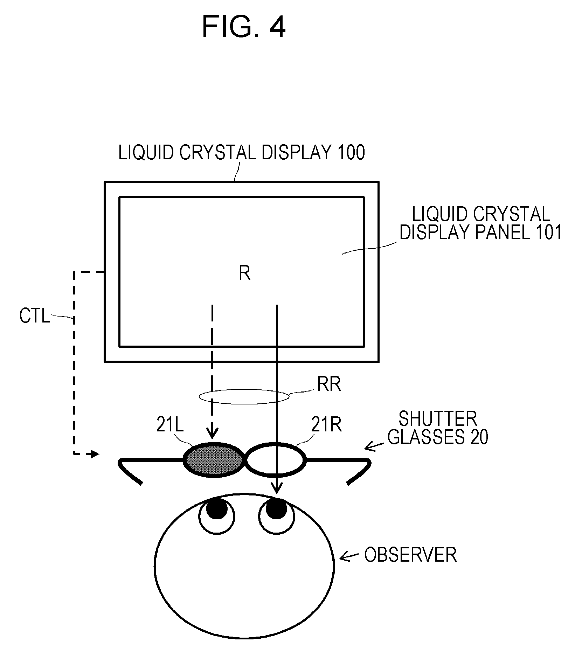

Fig. 3 shows the control operation of the shutter glasses 20 in the L sub-frame period. As shown in the drawing, in the L sub-frame period, the shutter of the left-eye lens 21L is set to the open state, and the shutter of the right-eye lens 21R is set to the closed state, so that display light LL based on the left-eye image L passes through only the left-eye lens 21L. Also, Fig. 4 shows the control operation of the shutter glasses 20 in the R sub-frame period. As shown in the drawing, in the R sub-frame period, the shutter of the right-eye lens 21R is set to the open state, and the shutter of the left-eye lens 21L is set to the closed state, so that display light RR based on the right-eye image R passes through only the right-eye lens 21R.

In the present embodiment, a wireless network capable of two-way communication such as IEEE802.15.4 is applied to the radio communication between the communication section 12 on the display apparatus 10 side and the communication section 24 on the shutter glasses 20 side. Therefore, the negotiation for establishing synchronization of the clock frequency and coincidence of the value of a counter used for opening/closing the shutters between the display apparatus 10 and the shutter glasses 20 can be performed by two-way communication. Further, internal information of the shutter glasses 20 and other data can be transmitted to the display apparatus 10 to provide services to the observer through the display screen.

For example, since the shutter glasses 20 use the battery 22 as a main power supply, its operation time is limited by the capacity of the battery 22 and, also, a decrease in remaining capacity necessitates an operation such as replacement or heavy electric of the battery. Accordingly, the shutter glasses 20 transmit internal information such as the remaining capacity of the battery 22 to the display apparatus 10, and on the display apparatus 10 side, notification or warning of the remaining capacity is displayed on the screen by the display section 11. Of course, this notification or warning can be presented as a time-division stereoscopic image. In such a case, the observer can check a state such as exhaustion of the battery 22 while keeping wearing the shutter glasses 20, that is, while viewing the stereoscopic image.

In the following, a description will be given of an operation procedure for displaying the state of the battery 22 of the shutter glasses 20 by the display apparatus 10.

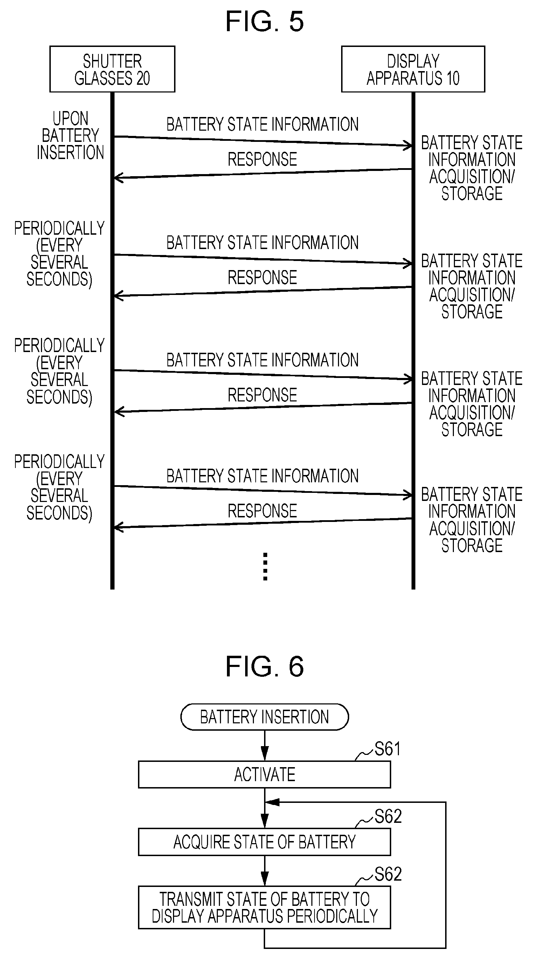

Fig. 5 shows an example of a communication sequence in which the display apparatus 10 acquires state information of the battery 22 from the shutter glasses 20.

On the shutter glasses 20 side, when the shutter glasses 20 activate upon insertion of the battery 22, monitoring of the state of the battery 22 is started, and when the state information is acquired, the display apparatus 10 is notified of the state information. On the other hand, upon receiving a frame from the shutter glasses 20, the display apparatus 10 returns a response frame.

Thereafter, the shutter glasses 20 continuously monitor the state of the battery 22, and periodically (for example, every several seconds) transmit a frame including state information of the battery 22 to the display apparatus 10. Then, the display apparatus 10 returns a response frame with every reception of a frame from the shutter glasses 20.

Fig. 6 shows, in the form of a flowchart, a procedure in which the shutter glasses 20 transmit information related to the state of the battery 22 to the display apparatus 10. The procedure shown in the drawing is implemented under centralized control by the control section 25, for example.

When the battery 22 is inserted in the shutter glasses 20 to activate the shutter glasses 20 (step S61), the battery monitoring section 23 acquires the state of the battery 22 (step S62), and the control section 25 periodically transmits the acquired state information to the display apparatus 10 via the communication section 24 (step S63) .

The state information of the battery 22 here refers to the output terminal voltage of the battery 22, the remaining capacity of the battery 22 at the present time based on the result of continuous monitoring of the output terminal voltage, or the like. It is also possible to transmit the output terminal voltage of the battery 22 to the display apparatus 10 as it is via the communication section 24, and monitor the state of the battery 22 such as the remaining capacity on the display apparatus 10 side.

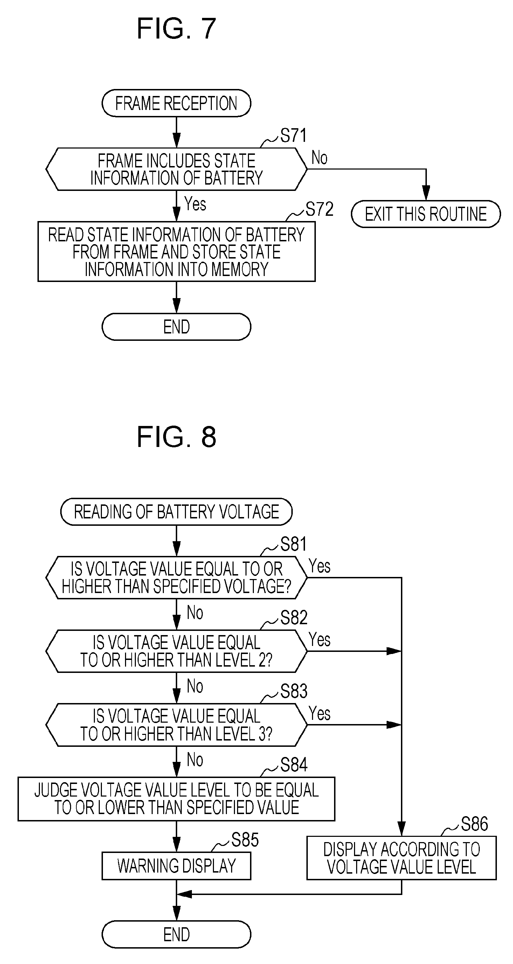

Fig. 7 shows, in the form of a flowchart, a procedure in which the display apparatus 10 receives state information of the battery 22 from the shutter glasses 20. The procedure shown in the drawing is implemented under centralized control by the control section 13, for example. It should be noted, however, that as the state information of the battery 22, information related to the output terminal voltage of the battery 22 is sent from the shutter glasses 20.

Upon receiving a frame from the shutter glasses 20 by the communication section 12, the control section 13 analyzes the payload, and checks whether or not the payload describes state information of the battery 22 (step S71). Here, if the received frame is related to information other than state information of the battery 22 (No in step S71), the control section 13 exits this routine, and activates another corresponding processing.

Also, if the received frame includes state information of the battery 22 (Yes in step S71), the control section 13 reads information related to the output terminal voltage of the battery 22 from the frame, and stores the information into, for example, a local memory (not shown) (step S72).

Fig. 8 shows, in the form of a flowchart, a procedure performed on the display apparatus 10 side on the basis of state information of the battery 22 which is acquired from the shutter glasses 20. The procedure shown in the drawing is implemented under centralized control by the control section 13, for example. Assumed here as processing based on state information of the battery 22 is presentation of visual information related to the voltage level on the screen of the display section 11.

Upon reading information related to the output terminal voltage of the battery 22 stored in the local memory (not shown), the control section 13 first checks whether or not this voltage value is equal to or higher than a specified voltage (step S81). Here, if the output terminal voltage of the battery 22 is equal to or higher than the specified voltage (Yes in step S81), the control section 13 executes processing for displaying visual information indicating that the output terminal voltage of the battery 22 is equal to or higher than the specified voltage (step S86).

Also, when the output terminal voltage of the battery 22 is below the specified voltage (No in step S81), the control section 13 subsequently checks whether or not this voltage value is equal to or higher than Level 2 (step S82). Here, if the output terminal voltage of the battery 22 is equal to or higher than Level 2 (Yes in step S82), the control section 13 executes processing for displaying visual information indicating that the output terminal voltage of the battery 22 is equal to or higher than Level 2 (step S86).

Also, when the output terminal voltage of the battery 22 is below Level 2 (No in step S82), the control section 13 subsequently checks whether or not this voltage value is equal to or higher than Level 3 (step S83). Here, if the output terminal voltage of the battery 22 is equal to or higher than Level 3 (Yes in step S83), the control section 13 executes processing for displaying visual information indicating that the output terminal voltage of the battery 22 is below Level 2 but is equal to or higher than Level 3 (step S86).

Also, when the output terminal voltage of the battery 22 is below Level 3 (No in step S83), the control section 13 judges that the output terminal voltage of the battery 22 is below a specified voltage and replacement or charging of the battery is required (step S84), and executes processing for displaying a warning display on the screen of the display section 11 (step S85).

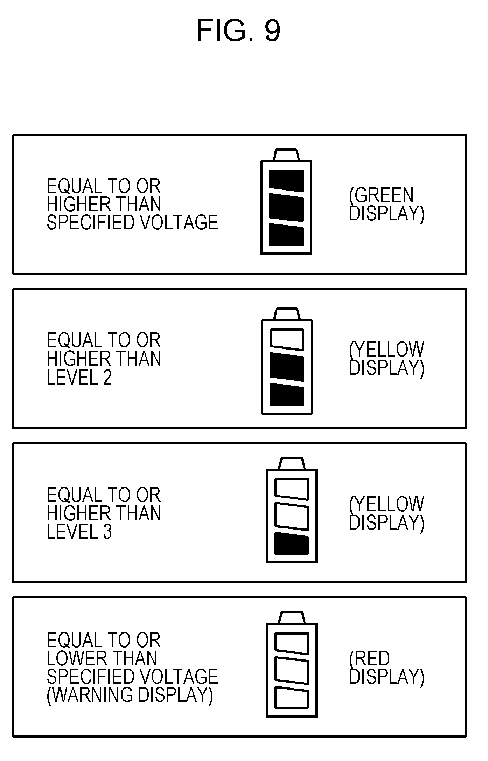

The visual information related to the voltage level which is displayed on the screen in the display section 11 is, for example, a battery icon intuitively expressing the output terminal voltage level or the remaining capacity. Fig. 9 illustrates battery icons that are displayed when the output terminal voltage of the battery 22 is equal to or higher than a specified voltage, is below the specified voltage but equal to or higher than Level 2, is below Level 2 but equal to or higher than Level 3, and is below a specified voltage and replacement or charging of the battery is required, respectively. The illustrated battery icons each express the output terminal voltage of the battery 22 as the remaining capacity. Also, if the display color is changed for each battery icon in accordance with the degree of warning in the order of, for example, green, yellow, and red, this further facilitates visual identification of the voltage level.

It should be noted that the procedure shown in Fig. 8 is based on the assumption that the remaining capacity of the battery 22 can be estimated from its output terminal voltage, and is merely an example. It should be understood that the procedure is changed as appropriate in accordance with the kind or characteristics of the battery 22.

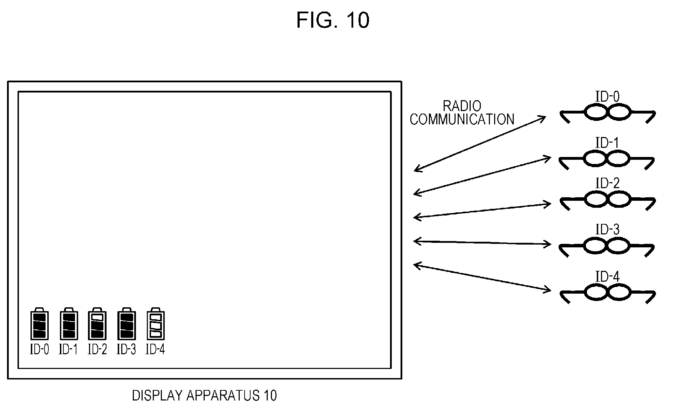

In the case where a wireless network such as IEEE802.15.4 is employed as the radio communication means between the display apparatus 10 and the shutter glasses 20, it is possible for the communication section 12 of the display apparatus 10 to act as an access point so as to contain a plurality of pairs of shutter glasses each acting as a terminal station (described above). Fig. 10 shows a state in which when a plurality of pairs of shutter glasses are connected to the display apparatus 10, battery icons for the individual shutter glasses are displayed on the screen of the display section 11.

Here, in the case where a plurality of battery icons are displayed simultaneously as shown in Fig. 10, for example, by attaching identification information such as a user name for each of the battery icons, each observer wearing shutter glasses is able to discern which battery icon is the observer's own battery icon. However, the discerning process is cumbersome, and for an observer whose own battery is not exhausted, display of a battery icon is unnecessary, and also hinders viewing of an image. Accordingly, the mechanism of time-division image display may be exploited to control the open/close timing for each pair of shutter glasses so that a (warning) battery icon is displayed only for an observer who is wearing shutter glasses whose battery is exhausted.

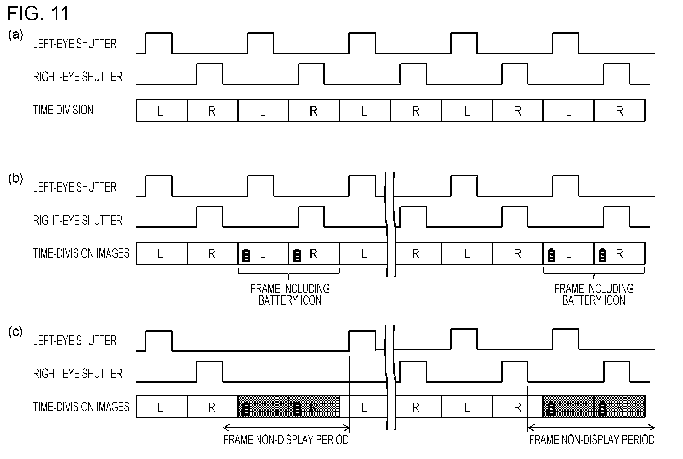

Fig. 11(a) shows the normal open/close timing control of the shutter glasses 20. In the display section 11 of the display apparatus 10, the left-eye image and the right-eye image are alternately switched and displayed in a very short frame cycle. On the other hand, the shutter glasses 20 side is controlled by means of notification of the open/close timing and parameters from the display apparatus 10 side, so that the left-eye shutter opens and the right-eye shutter closes in synchronism with the display period of the left-eye image, and the right-eye shutter opens and the left-eye shutter closes in synchronism with the display period of the right-eye image.

Also, Fig. 11(b) shows the open/close timing control of the shutter glasses 20 when displaying a battery icon to an observer who is wearing the shutter glasses 20 whose battery 22 is exhausted. In the display section 11 of the display apparatus 10, the left-eye image and the right-eye image are alternately switched and displayed in a very short frame cycle. Then, the display apparatus 10 receives state information of the battery 22 from each of pairs of shutter glasses 20 contained in the communication range, and upon detecting a decrease in the remaining capacity of the battery 22 in any one of the pairs of shutter glasses 20, the display apparatus 10 inserts a pair of left-eye image and right-eye image including a battery icon within a frame, at a predetermined interval. Then, with respect to the shutter glasses 20 for which a decrease in the remaining capacity of the battery 20 has been detected, the display apparatus 10 controls the open/close timing in the normal manner so that the right-eye shutter opens and the left-eye shutter closes in synchronism with the display period of the right-eye image. As a result, since the shutter glasses 20 perform the shutter opening/closing operation in the normal manner even during the period in which a left-eye image and a right-eye image including a battery icon are displayed within a frame, the battery icon is visible to an observer who is wearing the shutter glasses 20 for which the remaining capacity of the battery 22 has decreased.

Also, Fig. 11(c) shows the open/close timing control of the shutter glasses 20 with which, when displaying a battery icon as mentioned above, the battery icon is made invisible to an observer who is wearing the shutter glasses 20 whose battery 22 is not exhausted, in other words, an observer for whom a warning display is irrelevant. As described above, upon detecting a decrease in the remaining capacity of the battery 22 in any one of the pairs of shutter glasses 20 contained in the communication range, the display apparatus 10 inserts a pair of left-eye image and right-eye image including a battery icon within a frame at a predetermined interval. Also, for the other pairs of shutter glasses 20 whose battery 22 is not exhausted, the display apparatus 10 controls the open/close timing so as to keep both the left and right shutters closed during the period in which a left-eye image and a right-eye image including a battery icon are displayed within a frame. As a result, since the shutter glasses 20 for which the remaining capacity of the battery 22 has not decreased block both the left-eye image and the right-eye image including the battery icon, the battery icon becomes invisible to the observer.

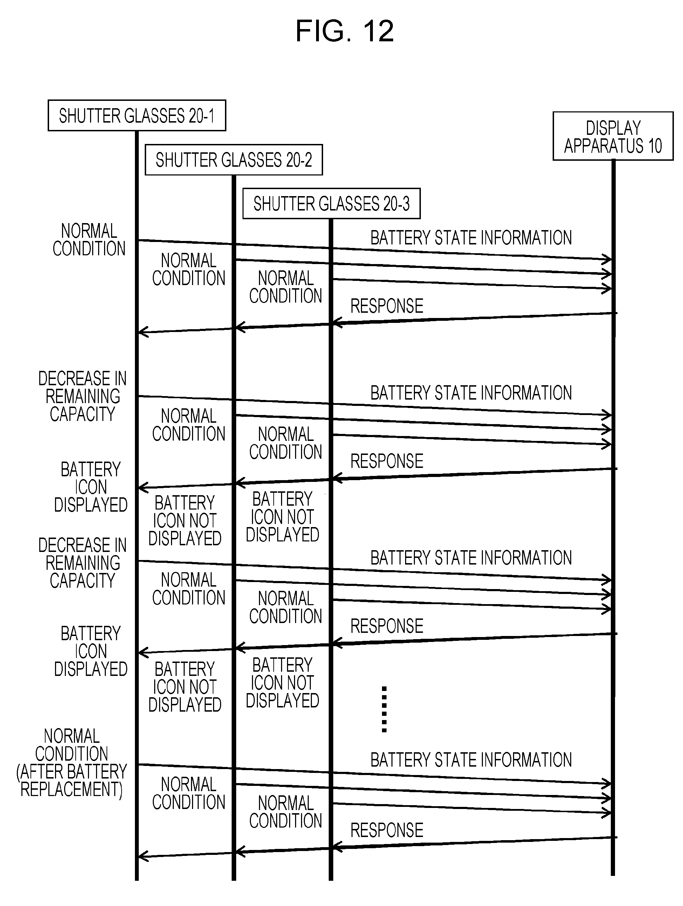

Fig. 12 shows an example of a communication sequence performed for the display apparatus 10 to acquire state information of the battery 22 from a plurality of pairs of shutter glasses 20-1, 20-2, and so on, and display a battery icon to a required observer in accordance with a decrease in the remaining capacity of the battery 22 in any one of the pairs of shutter glasses. It should be noted, however, that in the example shown in the drawing, the number of pairs of shutter glasses that communicate with the display apparatus 10 is three.

Each of the pairs of shutter glasses 20-1 and so on monitors the state of the battery 22, and periodically transmits a frame including the state information to the display apparatus 10.

The display apparatus 10 analyzes the state information of the battery 22 received from each of the pairs of shutter glasses 20-1 and so on. Then, when the open/close timing of the shutters and parameters in each of the pairs of shutter glasses 20-1 and so on are determined on the basis of the analysis results, that is, the remaining capacity of the battery 22 in each pair of shutter glasses, the open/close timing of the shutters and parameters are notified by means of a response frame to each of the pairs of shutter glasses 20-1 and so on. It should be noted that while in the example shown in the drawing the display apparatus 10 returns a response frame by means of broadcast transmission, the display apparatus 10 may return a response frame to each of the pairs of shutter glasses 20-1 and so on in a one-to-one manner.

Here, when the display apparatus 10 detects a decrease in the remaining capacity of the battery 22 only in the shutter glasses 20-1, the display apparatus 10 inserts a pair of left-eye image and right-eye image including a battery icon within a frame, at a predetermined interval. Also, with respect to the shutter glasses 20-1 for which the battery icon should be displayed, the display apparatus 10 determines the open/close timing and parameters in the normal manner so as to make the battery icon visible. On the other hand, with respect to each of the pairs of shutter glasses 20-2 and 20-3 for which the remaining capacity of the battery 22 has not decreased and the battery icon should not be displayed, the display apparatus 10 determines the open/close timing and parameters so as to keep both the left and right shutters closed during the period in which a left-eye image and a right-eye image including a battery icon are displayed within a frame. Then, by means of a response frame, the display apparatus 10 notifies each of the pairs of shutter glasses 20-1 and so on of the open/close timing and parameters for each of the pairs of shutter glasses 20-1 and so on.

The shutter glasses 20-1 perform the shutter opening/closing operation in the normal manner even during the period in which a left-eye image and a right-eye image including a battery icon are displayed within a frame. Therefore, the battery icon is visible to the observer who is wearing the shutter glasses 20-1.

Each of the pairs of shutter glasses 20-2 and 20-3 keeps both the left and right shutters closed during the period in which a left-eye image and a right-eye image including a battery icon are displayed within a frame. Therefore, since each of the pairs of shutter glasses 20-2 and 20-3 blocks both the left-eye image and the right-eye image including the battery icon, the battery icon becomes invisible to the observer.

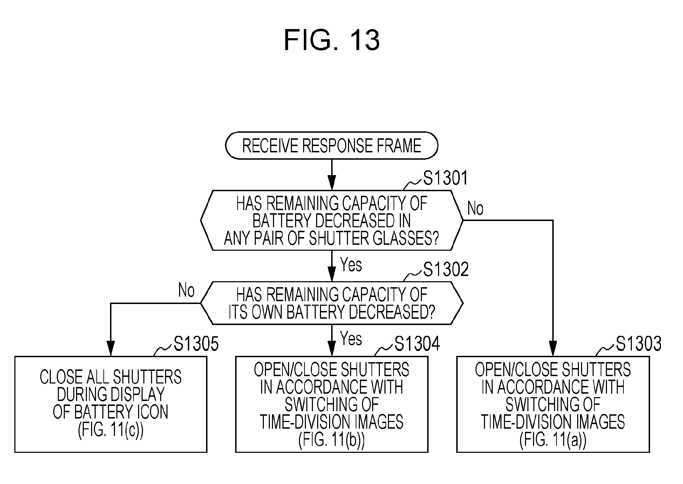

Fig. 13 shows, in the form of a flowchart, a procedure for controlling the open/close timing of the shutters on the shutter glasses 20 side in accordance with a response frame from the display apparatus 10, in the communication sequence shown in Fig. 12. The procedure shown in the drawing is implemented under centralized control by the control section 25, for example.

The control section 25 analyzes the response frame from the display apparatus 10, and checks whether or not a decrease in the remaining capacity of the battery 22 has been detected in any one of the pairs of shutter glasses 20 connected to the display apparatus 10 (step S1301).

Upon successfully confirming that the remaining capacity of the battery 22 has not decreased in all of the pairs of shutter glasses 20 connected to the display apparatus 10 (No in step S1301), as shown in Fig. 11(a), the control section 25 performs control in the normal manner so that the left-eye shutter opens and the right-eye shutter closes in synchronism with the display period of the left-eye image, and the right-eye shutter opens and the left-eye shutter closes in synchronism with the display period of the right-eye image (step S1303).

On the other hand, upon finding that the remaining capacity of the battery 22 has decreased in any one of the pairs of shutter glasses 20 connected to the display apparatus 10 (Yes in step S1301), the control section 25 further checks whether the remaining capacity of the battery 22 of its own has decreased or the remaining capacity of the battery 22 has decreased not in the shutter glasses 20 of its own but in another pair of shutter glasses 20 (step S1302).

Then, when it is found that the remaining capacity of the battery 22 of its own has decreased, as shown in Fig. 11(b), the control section 25 controls the open/close timing in the normal manner so that the right-eye shutter opens and the left-eye shutter closes in synchronism with the display period of the right-eye image (step S1304). As a result, the shutter glasses 20 perform the shutter opening/closing operation in the normal manner even during the period in which a left-eye image and a right-eye image including a battery icon are displayed within a frame, so the battery icon is visible to the observer.

Also, when it is found that the remaining capacity of the battery 22 has decreased not in the shutter glasses 20 of its own but in another pair of shutter glasses 20, as shown in Fig. 11(c), the control section 25 operates the left and right shutters to open and close so as to keep both the left and right shutters closed during the period in which a left-eye image and a right-eye image including a battery icon are displayed within a frame (step S1305). As a result, the shutter glasses 20 block both the left-eye image and the right-eye image including the battery icon, so the battery icon becomes invisible to the observer.

### Industrial Applicability

The present invention has been described above in detail with reference to specific embodiments. However, it is obvious that a person skilled in the art can make various modifications to and substitutions for the embodiments without departing from the scope of the present invention.

While in this specification the description is mainly focused on the embodiments that use a liquid crystal display as the display apparatus that displays a plurality of mutually different images by time division, the scope of the present invention is not limited to this. For example, other than conventional CRT (Cathod Ray Tube) displays, plasma display panels (PDPs), or electro-luminescence (EL) panels can be used as well.

While in this specification the description is mainly focused on the embodiments that employ, for example, a wireless network such as IEEE802.15.4 as the communication means for connecting between the shutter glasses and the display apparatus, the scope of the present invention is not limited to this. It is also possible to employ other wireless communication technologies or wire communication technologies as long as two-way communication is possible between the shutter glasses and the display apparatus.

The series of processing according to the embodiments described in this specification can be executed by either of hardware and software. If the processing is to be implemented by software, a computer program describing the procedure of the processing in the software in a computer-readable format may be installed and executed on a predetermined computer. Also, this computer program can be previously embedded in a product such as a liquid crystal display.

In short, the present invention has been disclosed by way of illustration, and the descriptions in this specification should not be construed restrictively. The scope of the present invention should be determined with reference to the claims.

### Reference Signs List

- 1: time-division stereoscopic image display system
- 10: display apparatus
- 11: display section
- 12: communication section
- 13: control section
- 20: shutter glasses
- 21: shutter glass function section
- 21L: left-eye lens, 21R right-eye lens
- 22: battery
- 23: battery monitoring section
- 24: communication section
- 25: control section
- 100: liquid crystal display
- 101: liquid crystal display panel
- 102: backlight
- 103: image signal processing section
- 104: shutter control section
- 105: timing control section
- 106: backlight control section
- 107: data driver
- 108: gate driver

## Claims

1. An image display apparatus comprising:
a display section that switches and displays a plurality of images that are different from each other by time division;
a communication section that communicates with shutter glasses driven by a battery; and
a control section that controls an apparatus operation,
wherein the communication section transmits information related to open/close timing of shutters to the shutter glasses, and receives state information of the battery from the shutter glasses, and
the control section displays a warning in the plurality of images on the display section, upon detecting a decrease in remaining capacity of the battery on a basis of the received state information of the battery.

2. The image display apparatus according to Claim 1, wherein:
the communication section is capable of communicating with a plurality of pairs of shutter glasses; and
the control section displays visual information in the plurality of images on the display section, the visual information representing a state of the battery for each of the pairs of shutter glasses.

3. The image display apparatus according to Claim 1, wherein:
the communication section is capable of communicating with a plurality of pairs of shutter glasses; and
the control section displays the plurality of images including display of the warning on the display section, only with respect to an observer wearing the shutter glasses for which a decrease in remaining capacity of the battery has been detected among the plurality of pairs of shutter glasses.

4. The image display apparatus according to Claim 3,
wherein
upon detecting a decrease in remaining capacity of the battery in any one of the plurality of pairs of shutter glasses with which the communication section communicates, the control section
inserts a frame including display of the warning into each of the plurality of images, and
transmits information related to open/close timing of the shutters from the communication section to other pairs of shutter glasses for which a decrease in remaining capacity of the battery is not detected, the information instructing that all of the shutters be kept in a closed state during a period in which the frame including display of the warning is displayed.

5. An image display system comprising:
shutter glasses each having a shutter mechanism provided in a lens, the shutter glasses being driven by a battery; and
a display apparatus that switches and displays a plurality of images that are different from each other by time division,
wherein the display apparatus transmits information related to open/close timing of shutters according to switching of the plurality of images, to the shutter glasses,
the shutter glasses perform an opening/closing operation of the shutters on a basis of the information related to open/close timing of the shutters received from the display apparatus, and transmit state information of the battery to the display apparatus, and
the display apparatus displays a warning in the plurality of images on the display section, upon detecting a decrease in remaining capacity of the battery on a basis of the state information of the battery received from the shutter glasses.

6. An image display method which displays an image on a display apparatus including a display section and a communication section, comprising:
a time-division image displaying step of switching and displaying a plurality of images that are different from each other by time division, by the display section;
a shutter controlling step of transmitting information related to open/close timing of shutters to shutter glasses driven by a battery, from the communication section; and
a controlling step of performing control so as to display a warning in the plurality of images on the display section, upon detecting a decrease in remaining capacity of the battery on a basis of state information of the battery which is received from the shutter glasses by the communication section.

7. A computer program which is described in a computer-readable format so as to execute, on a computer, processing for displaying an image on a display apparatus including a display section and a communication section, the computer program causing the computer to function as:
time-division image displaying means for switching and displaying a plurality of images that are different from each other by time division, by the display section;
shutter controlling means for transmitting information related to open/close timing of shutters to shutter glasses driven by a battery, from the communication section; and
controlling means for performing control so as to display a warning in the plurality of images on the display section, upon detecting a decrease in remaining capacity of the battery on a basis of state information of the battery which is received from the shutter glasses by the communication section.
